# EUROPEAN PATENT APPLICATION

(11) **EP 2 639 570 A2**
(43) Date of publication of application: **18.09.2013**
(21) Application number: 11854904.7
(22) Date of filing: 11.11.2011
(51) Int. Cl.: G01N 21/03, G01N 21/35

(54) **GAS ANALYZER AND OPTICAL UNIT FOR USE THEREIN**

(30) Priority: 12.11.2010 RU 2010147341
(71) Applicant: Obschestvo S Ogranichennoi Otvetstvennostyu "Optosens", St.Petersburg 194156 (RU)
(72) Inventor: MAKSYUTENKO, Michail Anatolievich, St.Petersburg 198207 (RU); NEPOMNYASHCHY, Sergey Vasilievich, St.Petersburg 197046 (RU); POGODINA, Sofia Borisovna, St.Petersburg 194106 (RU); KHREBTOV, Vyacheslav Vladimirovich, St.Petersburg 195279 (RU)
(74) Representative: Westendorp | Sommer
(86) International application number: PCT/RU2011/000894
(87) International publication number: WO 2012/093952

(57) **Abstract**

The present invention concerns measuring equipment, specifically devices for control of hydrocarbon content in the atmosphere.

The gas analyzer contains the optical block 1 inside which a channel 4 is formed from its inlet 2 to outlet 3 for infra-red radiation passage, the control unit 5 connected to the optical block inlet 2 and outlet 3, and the infra-red radiation source 6 located at the optical block 1 inlet, as well as the infra-red radiation detector 7 installed at the said block 1 outlet; used as an infra-red radiation source is a quick-acting differential photovoltaic detector with a mirror filter 10, which reflection and spectral characteristics of transmission are consistent with the measured gas absorption spectrum and spectrum of the infra-red radiation source 6 correspondingly. The gas analyzer provides for achievement of the following technical results: high sensitivity, minimum energy consumption.

The optical block 1 of the gas analyzer contains the inner channel 4 for infrared radiation passage, the infra-red radiation source 6 located at the channel 4 inlet and the infra-red radiation detector 7 located at the channel outlet. At that, the channel 4 is made in the form of a multiway mirror optical tray capable of concentrating the transmitted infra-red radiation from its inlet, along its path and at its outlet to the detector 7 of this radiation, and as an infra-red radiation source 6, which creates the directional infra-red radiation to the concentrator located in the tray quick-acting pulse LED is used. The gas analyzer optical block 1 provides for achievement of the following technical results: high coefficient of IR radiation transmission, minimum dissipation of radiation energy from its source to detector, small sizes.

## Description

### TECHNICAL FIELD

The present invention concerns measuring technique, specifically devices for control of hydrocarbon content in the atmosphere. These devices represent measuring means, primarily portable, with the help of which it is possible to carry out continuous control of explosive concentrations level, for example, methane in production facilities or mines by means of measurement and analysis of gas coming to the suggested device from environment due to molecular diffusion, i.e. without creation of positive gas flow.

### PRIOR ART

An infrared absorption gas analyzer (RF patent No. 2292039, publ. 18.02.2005, IPC G01N21/61), hereinafter referred to as the gas analyzer, is well known. It contains a control unit and an optical block comprising the infrared radiation (hereinafter - IR) source and detector. A channel for IR radiation transmission from its source to the detector is formed inside the optical block from its inlet to outlet. The IR radiation source is installed at inlet to optical block; the IR radiation detector is installed at outlet from this block. The control unit is capable of processing IR radiation received by the detector and displaying the corresponding results. At that, the IR radiation source has a spherical mirror reflector. The channel for IR radiation transmission is formed by the operating and support chambers. The operating chamber is made in the form of a hollow flattened cone with internal spherical mirror reflector and is installed directly inside the support chamber on the same optical axis as the IR radiation source. The IR radiation detector has a focusing device and is installed along the optical axis perpendicular thereto. A mirror divider and a rotating disc with a profile window are located in the intersection of these axes.

The gas analyzer has some significant disadvantages:
- high energy consumption due to loss of significant part of IR radiation source energy at mirror reflector and due to IR radiation flux interception by the disc with profile window, as well as effective use of only small areas in IR radiation wide spectrum by the source;
- low operational reliability due to presence of multiple mechanical units, such as rotating disc with profile window and rotating optical filter;
- enlarged overall dimensions which is conditioned by the optical block representing a spatially-separated complicated system with a great number of mechanical units and spherical mirror reflectors located in different parts of the block.

The gas analyzer (application EP 2169384, IPC G01N21/35, publ. 31.03.2010). It is intended for monitoring the respiratory gases with provision of sufficient accuracy of measurement on account of compensation of external influence on trajectory of radiation passage. This task is solved by means of application of IR radiation source, gas tray, dichroic beam splitter, analyzing filter, reference detector, measuring detector. At that, the dichroic beam splitter is capable of changing beam angle depending on the gas being analyzed. The dichroic beam splitter is installed at an angle of 45° to photodetector normal lines located at an angle of 90° to each other.

The known gas analyzer is intended for creation of a multi-component device used in stationary conditions or on movable medical stations. Considered as disadvantages of the known analyzer are large sizes and high energy consumption.

The optical unit (patent 2372606, IPC G01N21/03, publ. 10.11.2009) used in the gas analyzing devices in which the channel for infra-red radiation passage is capable of concentrating this radiation in the way of its passage through the channel and at the outlet to the infra-red radiation receiver.

The known optical unit does not provide the necessary sensitivity of the gas analyzing device.

Known is the infra-red gas analyzer (patent US 6114700, IPC G01N21/05, publ. 05.09.2000), in which photovoltaic detectors are used as infra-red radiation detectors.

However, the use of the photovoltaic detector in the known gas analyzer does not provide combination of high detectability with fast response.

Known is the optical gas sensor device based on the immersion diode optocouples (patent RU 75885, IPC G01N21/35, publ. 27.08.2008), including a gas tray the reflecting surfaces of which form the optical scheme for generation of probe radiation beam, a probe IR radiation source in the form of a light emitting diode and a photoreceiver in the form of a photodiode, which are mechanically connected to the gas tray housing. The gas tray of the device includes mechanical adjusting elements; the light emitting diode and the photodiode are made using the immersion optics (immersion diodes) and are rigidly connected to the adjusting elements.

Disadvantage of the known device consists in application of immersion diodes which have uncontrolled misalignment of optical scheme and diagrams. Application of immersion diodes leads to structural complication of the gas analyzer on account of implementation of adjustment devices. This also leads to increase in dimensions.

Known is the infrared band gas analyzer (patent RU2287803, IPC G01N21/35, publ. 20.11.2006) containing the electromagnetic radiation source in the form of LED matrix emitting the reference and operating wave lengths, the gas tray located along the radiation path, the main photoreceiver installed at the tray outlet for reception of the reference and operating wave length, as well as the signal processing unit containing the analog-to-digital converter (ADC) the outlet of which is connected with the microprocessor, the indication device. The additional photoreceiver is installed at the tray inlet; at that, pyroelectric photoreceivers are used as both photoreceivers.

LED matrix in the known gas analyzer must ensure fast response of each LED so that the total power is constant at pulse current supply.

During application of such matrix it is impossible to provide simultaneous radiation concentration of each matrix LED at a single photoreceiver and minimize overall dimensions of the optical block. Besides, the IR radiation sources are used in the known invention in combination with the pyroelectric type photo-receivers.

The optical block is well known from description of said gas analyzer invention (RF patent No. 2292039, publ. 18.02.2005). A channel for IR radiation transmission from its source to the detector is formed inside the optical block from its inlet to outlet. The IR radiation source is installed at inlet to the channel; the IR radiation detector is installed at outlet from this channel. At that, the channel is formed by the operating and support chambers. The operating chamber is made in the form of a hollow flattened cone with internal spherical mirror reflector and is installed directly inside the support chamber on the same optical axis as the IR radiation source. The IR radiation detector has a focusing device and is installed along the optical axis perpendicular thereto. A mirror divider and a rotating disc with a profile window are located in the intersection of these axes. The corresponding lamp is used as an infrared radiation source.

Disadvantages of this optical block of the gas analyzer are as follows:
- low operational reliability conditioned by the presence of a mechanical unit, namely the rotating disc with profile window in the radiation detector, as well as complicated scheme of IR radiation pathway formation in the block;
- large overall dimensions conditioned by the presence of spatially-separated complicated channel system for infra-red radiation passage with its source and detector and the corresponding location of radiation concentrator therein.

Optical gas sensor (patent EP1995586, IPC G01N21/03, publ. 26.11.2008), hereinafter - the gas analyzer, is well known. It contains the optical block inside which two bent channels are created for IR radiation passage from inlet to outlet, going from its source located at the optical block inlet and directed to its detector installed at said block outlet. There is a control unit connected with the inlet and outlet of the optical block and capable of changing the IR radiation source operation modes and processing of IR radiation received by the detector, as well as displaying the corresponding result. Channels are spatially separated and their bend radii fit into the optical block housing.

Disadvantages of the said gas analyzer are as follows:
- large losses of IR radiation energy due to presence of two curvelinear channels for its passage, as well as necessity in radiation transmission from one channel to another and, accordingly, great power consumption;
- operation persistence conditioned by slow ingress of gas to these channels due to necessity in provision of self-diffusion of gas inside two channels.

The optical block used in the gas sensor is known from description of optical gas sensor (patent EP1995586, IPC G01N21/03, publ. 26.11.2008) - the gas analyzer. Two spatially-separated bent channels for IR radiation transmission from its source to the detector of this radiation are formed inside this block from its inlet to outlet. These channels form a tray at the inlet to which the IR radiation source is located, and at the outlet - the detector of this radiation is located. Channels are made along radii fit into the optical block housing. Gas comes from outside to these channels by means of natural self-diffusion. At that, inner surfaces of channel walls reflect the IR radiation.

Disadvantages of this optical block are as follows:
- large losses of IR radiation energy due to presence of two curvelinear channels for its passage, as well as necessity in radiation transmission from one channel to another and, accordingly, great power consumption;
- structural complexity conditioned by both the presence of two channels of irregular shape and the necessity in their incorporation to a single tray, as well as provision of gas ingress to the tray in the process of its natural self-diffusion from outside.

Integrated optical gas sensor (GB2401432, IPC G01N21/03, publ. 10.11.2004) - the gas analyzer is well known. It contains the optical block. U-shaped channel with rectangular cross-section for IR radiation transmission from its source to the detector of this radiation is formed inside this block from its inlet to outlet. A filament lamp located inside the optical block at the channel inlet is used as the IR radiation source, and the IR radiation detector - at the channel outlet. At that, the U-shaped channel radius fits into the optical block housing. There is a control unit connected with the inlet of the optical block and capable of changing the IR radiation source operation modes and processing of IR radiation received by the detector, as well as displaying the corresponding results.

This invention is selected as a prototype, since it has the greatest number of essential features common with the gas analyzer being the subject of application, and is aimed at solving the similar task.

Disadvantages of the prototype are as follows:
- large losses of infra-red radiation energy due to presence of U-shaped channel for its passage, where high dissipation of radiation energy takes place because of peculiarities of IR radiation reflection from curvilinear surface of the channel inner walls.
- high power consumption, since a filament lamp is used as an IR radiation source, and a pyroelectric receiver is used as an IR radiation detector and, correspondingly, the control unit operates in the low-frequency mode with low pulse ratio;
- low level of IR radiation energy registered by the detector due to high divergence angle at the channel outlet and at its ingress to the detector, as well as high dissipation of IR radiation energy due to the presence of U-shaped channel.

The optical block inside which a U-shaped channel for IR radiation passage is formed from inlet to outlet is known from the description of the integrated optical gas sensor (GB2401432, IPC G01N21/03 publ. 10.11.2004) - the gas analyzer. At that, the IR radiation source is installed inside this block at the channel inlet, and the detector of this radiation - at the outlet. U-shaped channel radius fits to the optical block housing and has a rectangular cross-section. Its inner walls have a uniform coating which reflects radiation. The filament lamp is used as IR radiation source.

This optical block is selected as a prototype, since it has the greatest number of essential features corresponding to the essential features of the gas analyzer being the subject of application, and is aimed at solving the similar task.

Disadvantages of this prototype are as follows:
- high energy consumption for its operation, which is conditioned by application of the filament lamp as IR radiation source;
- low level of IR radiation energy registered by the detector due to high divergence angle at the channel outlet and at its ingress to the detector, as well as high dissipation of IR radiation energy due to the presence of U-shaped channel.

### SUMMARY OF THE INVENTION

The task being solved in the present invention consists in creation of gas analyzer and its optical block which would ensure increased sensitivity with minimum energy consumption and maintaining small sizes, as well as increased IR radiation transfer ratio with maximum energy use.

The task in concern of gaz analyser is solved by that the mentioned gas analyzer contains the optical block, inside which the channel for IR radiation passage is created, the control unit connected with the optical block inlet and outlet, and the IR radiation source located at the optical block inlet, as well as Irradiation detector installed at the inlet to said block; at that, the control unit is capable of changing the IR radiation source operation modes and processing the IR radiation received by the detector with indication of the obtained results. ACCORDING TO the present invention the channel for IR radiation passage in the optical block is capable of concentrating this radiation in the way of its passing through the channel and at the outlet of the IR radiation detector. Used as an IR radiation detector is a quick-acting differential photovoltaic detector with mirror filter which spectral characteristics of transmission and reflection are consistent with the measured gas absorption spectrum and IR source radiation spectrum correspondingly, which is located in the said detector and is capable of compensating the influence of external action to the trajectory of IR radiation passage along the tray on the result of gas concentration measurement. Used as an IR radiation source is a quick-acting source which pulse ratio of switching on and off is consistent with the pulse ratio of differential photovoltaic detector switching on and off by means of control unit.

Such new technical solution with all its essential features allows creation of a new gas analyzer which provides for achievement of the following technical results: achievement of maximum sensitivity on account of source radiation energy concentration, as well as compensation of external actions to the trajectory of infra-red radiation passage along the large optical path in the mentioned channel; provision of minimum energy consumption on account of application of the corresponding quick-acting infra-red radiation pulse source and IR radiation detector, which pulse ratios of switching on and off are adjusted by the control unit, as well as decrease in the radiation energy dissipation.

Compared to the prototype, the proposed gas analyzer has significant distinctions the majority of which are not known as well. For example, the mirror filter located in the detector with ability to compensate the influence of external actions to the trajectory of IR radiation passage along the tray on the result of gas concentration measurement. Besides, the spectral transmission and reflection characteristics of the mirror filter are coordinated with the absorption spectrum if the measured gas and radiation spectrum of the IR radiation source correspondingly. Moreover, the pulse ratio of IR radiation source switching on and off is coordinated with the pulse ratio of switching on and off of the differential photovoltaic detector which receives this radiation. Therefore, the proposed gas analyzer has significant distinctions.

According to the present invention the channel for IR radiation passage is capable of concentrating the IR radiation energy from the inlet until it gets to the detector.

In the invention being applied for the task of creation of new portable gas analyzer is solved, in particular, creation of new portable gaz analyzer for personal safety in extreme conditions and providing achievement of the following technical result: achievement of maximum sensitivity with simultaneous provision of minimum energy consumption and small structural dimensions. Achievement of these results is a contradictory task. So, to achieve maximum sensitivity it is necessary to provide maximum optical length of radiation dissipation path, which means increase in structural dimensions of the device. Minimum energy consumption goes against achievement of maximum sensitivity, since it is necessary to provide maximum radiation passage through the tray on a long path of its channel. These contradictions are not resolved in the known gas analyzer. Measurement accuracy increase in the known gas analyzer is achieved by means of compensation of external influence (ambient temperature, humidity, pressure, mechanical action to the tray) on the trajectory of radiation passage; at that, structural dimensions loss and high energy consumption takes place. This contradiction is resolved in the gas analyzer being applied for.

Mechanical compensation is implemented in the gas analyzer being applied for in two steps at least. At the first step, it is implemented thanks to structural arrangement of spherical elements in the tray, since spherical elements are located in such a way that the beam deviation, occurring at mechanical action to the tray housing, is compensated. At the second step, mechanical compensation takes place at the outlet from the tray thanks to the use of differential receiver in which two photosensitive platforms, filter-window and mirror filter are integrated functionally and structurally. In the invention in-phase displacement takes place, i.e. if the beam is displaced at the tray outlet it is displaced at both photo-sensitive platforms to the same side and distance. In this case, as experiments have shown, it is possible to compensate the beam trajectory deviation angle of about 10° due to influence of external mechanical actions, which is approx. 5-10 times more than in the known invention. Thus, in the invention being applied for the principle of mechanical compensation is implemented more successful, since it is known that the less distance is between the splitter center and photo-sensitive platform, the more is the angle of radiation beam incidence, which is compensated by this system. Besides, compensation is carried out in two steps, which allows increasing the compensation quality at the second step.

The LED-type source with the intrinsic narrow radiation spectrum is used as the infra-red radiation source in the invention being applied for. At that, approx. 80% of energy from the source is used. This is achieved because after radiation passing through the tray with the gas being analyzed the radiation spectrum comes to the mirror filter implemented in such a way that approx. 51-52% of source energy is reflected to the reference receiver, and a part of radiation spectrum (within 22-23% of source energy) comes to the measuring receiver, which contains the wavelength area absorbed by the gas being analyzed. Thus, coordination of spectral characteristic of transmission and reflection with the absorption spectrum of the gas being analyzed and radiation spectrum of the infra-red source correspondingly is carried out in the gas analyzer applied for. This contributes to decrease in power consumption. At that, total coefficient of LED-type source energy application lies within 74-75% of the source energy.

It should be especially noted that the radiation spectrum of the measuring and reference receiver in the invention applied for is adjusted with the absorption spectrum of the gas being analyzed and source radiation spectrum; no such adjustment exists in the known invention. Spectral characteristic of the measuring receiver is adjusted with the gas absorption spectrum. But neither spectral characteristic of the reference receiver, nor spectral characteristic of the measuring receiver are adjusted with the source radiation spectrum.

All these elements in the present invention are integrated structurally and functionally in a single receiving device; at that, the beam splitter and the analyzing filter are integrated in the mirror filter. The optical scheme in the present gas analyzer provides repeated gain in efficiency of the infra-red radiator energy application from the point of view of both the source radiation spectral band application and the source beam energy concentration at each of the photo-receiving platforms. This is extremely important for the task being solved, i.e. for creation of the low-consumption gas analyzer.

Thus, high coefficient of IR radiation energy transmission with maximum application of IR radiation energy and small dimensions are achieved in the gas analyzer applied for. Compared to the known invention, small structural dimensions of the devices applied for are ensured by means of functional and structural integration of photo-sensitive elements, mirror filter, filter window in a single photo-receiving device, as well as by means of application of optical block in which the channel for infra-red radiation transmission is capable of concentrating this radiation in the path of its transmission through the channel and at the outlet from it to the infra-red radiation detector, which ensures maximum sensitivity. Thus, the longer optical path is created with small dimensions of the tray.

Besides, the gas analyzer applied for differs from the known one in the channel for infra-red radiation passage in the optical block. This channel is capable of concentrating the radiation in the way of its passage through the channel and at its outlet to the infra-red radiation detector. At that, quick-acting photovoltaic elements are used as photo-sensitive elements constituting a differential receiver of infra-red radiation; and a quick-acting source is used as an infra-red radiation source. At that, the pulse ratio of the source switching on and off is adjusted with the pulse ratio of the differential receiver switching on and off by means of the control unit.

The main advantage of the photovoltaic detector application in the invention applied for is a combination of high detectability with fast response. In order to decrease energy consumption the selected IRS is used in the mode of short powerful pulses; at that, the quick-acting receiver capable of catching these pulses is required. At that, the pulse ratio of the source switching on and off is adjusted with the pulse ratio of the differential receiver switching on and off by means of the control unit.

Besides, for small dimensions and possibility to compensate influence of mechanical actions on trajectory of beams coming to the detector, the use is made in the applied invention of the differential receiver, in which mirror filter and two photo-sensitive galvanic platforms are integrated functionally and structurally. It should be specially noted that it is necessary to use the quick-acting infra-red radiation source in combination with the use of quick-acting detector to achieve minimum energy consumption in the gas analyzer applied for.

The task in relation to the optical block was solved as follows, the optical block of the gas analyzer contains the inner channel for infra-red radiation passage, the infra-red radiation source located at the channel inlet and the infra-red radiation detector located at the channel outlet. According to the present invention the channel is made in the form of a multiway mirror optical tray capable of concentrating the transmitted infra-red radiation from its inlet, along its path and at its outlet to the detector of this radiation. The quick-acting pulse LED is used as an infra-red radiation source, which creates the directional infra-red radiation to the concentrator located in the tray. The infra-red radiation source represents a quick-acting differential photovoltaic detector with a mirror filter, the spectral characteristic of transmission and reflection of which are adjusted to the absorption spectrum of the gas being measured and passing through the tray, and the infra-red source radiation spectrum, and capable of compensating the influence of external actions to the trajectory of infra-red radiation passing through the tray on the gas concentration measurement result.

There is an option according to which the multiway mirror tray is formed of flat reflecting mirrors and spherical or parabolic reflecting mirrors the number of which exceeds that of reflecting flat mirrors and which serve as a concentrator of radiation energy. The mirror filter in the differential photoreceiver is installed at an angle of 45° to the photoreceiver normal lines. The infra-red radiation source is directed to the first reflecting spherical mirror oriented at the corresponding angle to the main optical axis of the tray and is capable of radiation energy transmission along the zig-zag trajectory between the mirrors with generation of the source image on flat mirrors and the differential photoreceiver containing the measuring quick-acting photovoltaic detector and reference quick-acting photovoltaic detector located at an angle of 90° to each other.

Such new technical solution with all its essential features allows creation of the gas analyzer optical block which provides for achievement of the following technical results:
1. High coefficient of IR radiation transmission which is conditioned by the presence of a channel for infra-red radiation passage and representing the multiway mirror tray formed of flat reflecting mirrors and spherical and parabolic mirrors a number of which exceeds the reflecting flat mirrors, and serving as radiation energy concentrator, as well as mirror filter which spectral characteristic of transmission and reflection is adjusted with absorption spectrum of the measured gas passing along the tray and the radiation spectrum of the IR radiation source. At that, the mentioned mirror filter is capable of compensating the external actions to the trajectory of the infra-red radiation transmission along the tray, in particular, at an angle of 45° to the photoreceiver normal lines.
2. Minimum dissipation of radiation energy from its source to detector, which allows maximum application of the transmitted IR radiation energy to determine the gas content.
3. Small dimensions which is conditioned by the corresponding connection and application of the IR radiation source, channel for this radiation transmission and its detector.

According to the invention being applied for, the effective use of such tray is possible provided that the quick-acting pulse LED is used as an infra-red radiation source and its radiation is directed to the concentrator located in the tray, and the infra-red radiation source represents a quick-acting differential photovoltaic detector with a mirror filter, the spectral characteristic of transmission and reflection of which is adjusted to the absorption spectrum of the measured gas passing through the tray and the radiation spectrum of the infra-red radiation source. At that, the quick-acting differential photovoltaic detector with a mirror filter can compensate the influence of external actions to the trajectory of IR radiation passage along the tray on the result of gas concentration measurement.

The optical block being applied for differs from the mentioned above in that the channel for infra-red radiation passage represents a multiway tray. This tray is capable of concentrating the radiation passing through it from the inlet, along its path and at the outlet to the detector of this radiation. The quick-acting pulse LED which creates directed infra-red radiation to the concentrator is used as an infra-red radiation source. Quick-acting photovoltaic detectors are used as receivers making part of the differential infra-red radiation detector. To achieve an increase in sensitivity of measurements by means of radiation energy concentration, it must be oriented so that the infra-red radiation source is directed to the first reflecting spherical mirror of the tray oriented at the corresponding angle to the main optical axis of the tray with a possibility to transmit the radiation energy along the zig-zag path between the mirrors with simultaneous creation of source image on flat mirrors and on the differential photo-receiver; the differential photo-receiver is located so that the radiation source image plane at the tray outlet coincides with the measuring photo-sensitive element location plane; at that, structure of the photo-receiving device automatically provides for coincidence of the radiation source image plane with the location plane of the second (reference) photo-sensitive element. This contributes to achievement of the declared technical result, namely increase in measurement sensitivity by means of radiation energy concentration.

Most effectively the optical block can be used in combination with the proposed structural elements, since it provides not only compensation of external mechanical influence on measurements, but decreases dimensions of the whole device, as previously stated.

Implementation of semiconductor elements which are used in the gas analyzer as radiation detector and source and possess properties of fast response and low energy consumption is necessary but not sufficient for achievement of fast response with simultaneous minimization of energy consumption and small dimensions of the device. The infra-red pulse LEDs, for example, are highly responsive, but low energy consumption of such sources is provided only in the corresponding modes of power supply. Operation of the control unit is prominent in these issues in the invention applied for.

The aggregate of essential features contributes to achievement of high transfer ratio of IR radiation with maximum application of IR radiation energy and maintenance of small sizes, as well as provision of IR radiation passage from inlet to the optical block to its outlet to the detector of this radiation along large optical path.

### BRIEF DESCRIPTION OF THE DRAWINGS

Technical substance of the proposed gas analyzer and the optical block used therein is explained in the drawings, where:
Fig. 1 - block scheme of gas analyzer;
Fig. 2 - block scheme of optical block;
Fig. 3 - source radiation spectrum;
Fig. 4 - transmission spectrum of differential photovoltaic detector window;
Fig. 5 - form of mirror filter spectral transmission;
Fig. 6 - form of mirror filter reflection spectrum;
Fig. 7 - time diagram of the maim gas analyzer assemblies operation.

### INDUSTRIAL APPLICABILITY

Practical application of the gas analyzer and its optical block is explained in the description below.

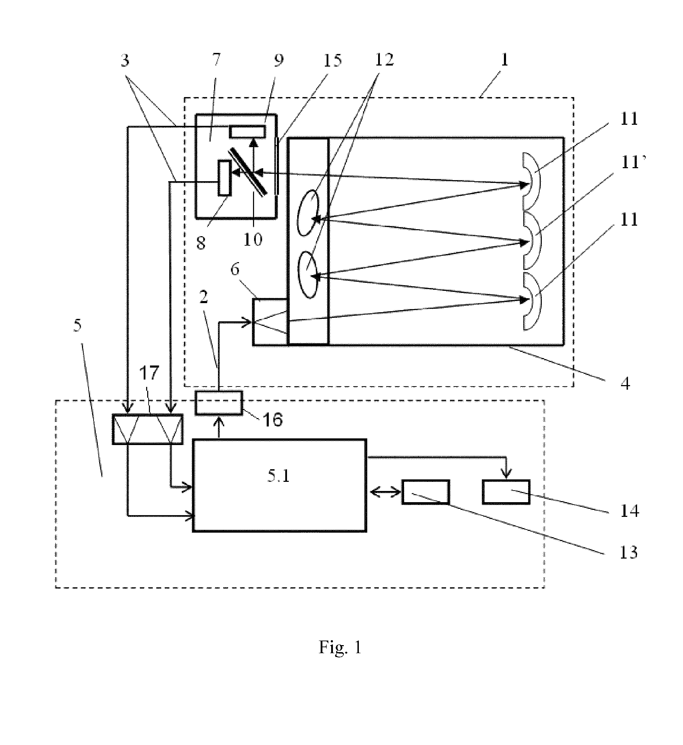

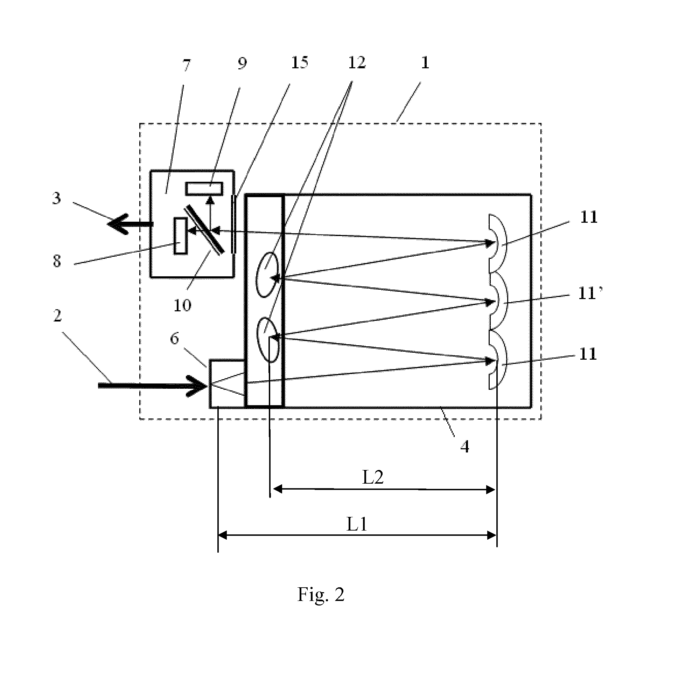

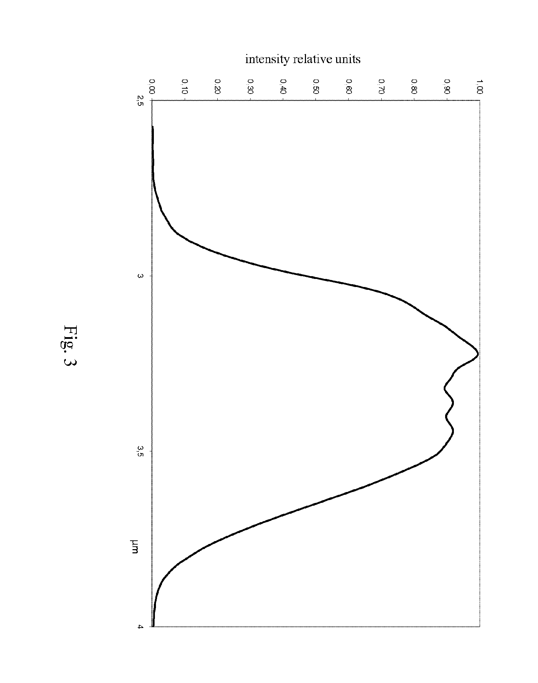

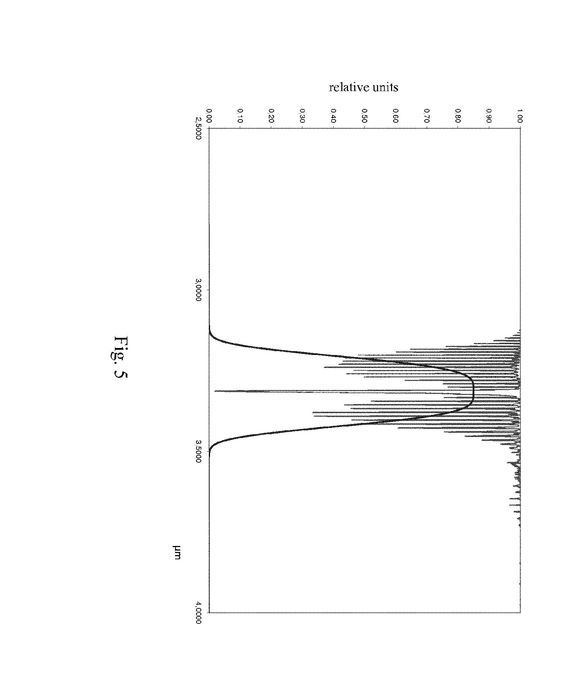

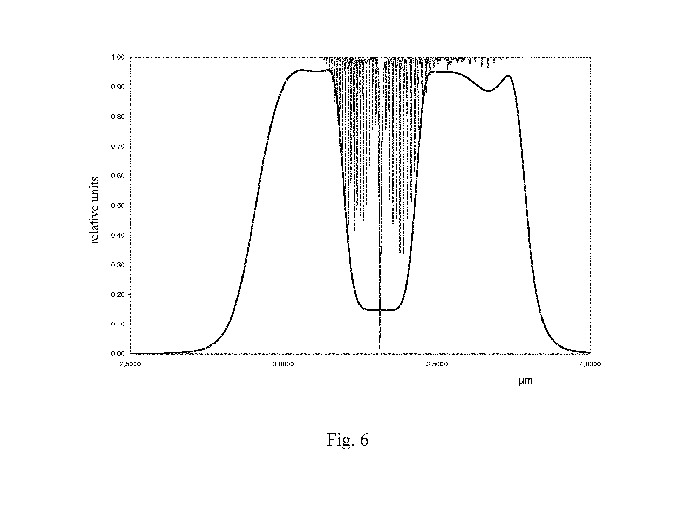

The proposed gas analyzer (fig. 1) contains optical block 1, inside which a channel 4 is created for IR radiation transmission from inlet 2 to outlet 3, and control unit 5, based for instance on the microcontroller 5.1, connected with inlet 2 and outlet 3 of optical block 1. There is also an IR radiation source 6 located at inlet 2 of optical block 1 and an IR radiation detector 7 installed at outlet 3 of the mentioned block 1. At that, control unit 5 is capable of processing this radiation received by the IR radiation detector 7 with indication of the obtained results. In the optical block 1 the channel 4 for IR radiation transmission is implemented with a possibility to concentrate this radiation along its path through the channel 4 and at outlet from it on the IR radiation detector 7, which represents a quick-acting photovoltaic detector with a mirror filter 10. The spectral characteristic of transmission (fig. 5) and reflection (fig. 6) of this mirror filter 10 are adjusted with the absorption spectrum of the measured gas (not shown in the drawing) and the IR radiation spectrum (fig. 3) of the IR radiation source 6 correspondingly. Mirror filter 10 is located in the IR radiation detector 7 and is capable of compensating external actions to the trajectory of IR radiation passage along the mentioned channel 4; a quick-acting source with the pulse ratio of switching on and off adjusted by control unit 5 to the pulse ratio of switching on and off of detector 7 (the differential photovoltaic detector) is used as IR radiation source 6. The IR radiation receiver 7 (fig. 1) is connected to the inlet of control unit 5, which can be based, for example, on the microcontroller 5.1. As microcontroller 5.1 microcontrollers of several manufacturers (e.g. MSP430 series by Texas Instruments company or STM family by ST company) can be used. The control unit 5 contains a digital port of input/output 13 and an analog port of output 14 which serve for gas analyzer control and data transmission to the user, for example, to safety system (not shown in the drawing). The gas analyzer can be located in the housing (not shown in the drawing) on the surface of which openings for gas ingress to optical block 1, in particular to its channel 4 for IR radiation passage, are provided. At that, these openings can be equipped with dust-protecting devices, for example, dust-protecting screen (not shown in the drawing). As mentioned above, the optical block 1 (fig. 1, 2) of the gas analyzer is formed by the channel 4 for IR radiation passage. The IR radiation source 6 is located at the inlet 2 to optical block 1, the IR radiation detector 7 - at the outlet 3. The quick-acting IR pulse LED installed at the inlet to channel 4 is used as IR radiation source 6. Channel 4 is made in the form of a miniature multiway mirror tray. It is capable of concentrating the IR radiation passing from its inlet, along its path and at its outlet, which excludes dissipation of optical signal. The IR radiation detector 7 is installed at the outlet of channel 4. Lateral caustic surface dimension at the outlet of channel 4 for all non-homocentric beams does not exceed the area of the outlet window 15 of the IR radiation detector 7. The IR radiation detector 7 contains the measuring quick-acting photovoltaic detector 8 and the reference quick-acting photovoltaic detector 9 located at an angle of 90° to each other. The interference mirror filter 10 is located between the measuring photovoltaic detector 8 and the reference photovoltaic detector 9 at an angle of 45° to normal lines of the photosensitive layers of detectors.

The spectral characteristic of transmission (fig. 5) and reflection (fig. 6) of this mirror filter 10 are adjusted with the absorption spectrum of the measured gas (not shown in the drawing) and the IR radiation spectrum (fig. 3) of the source 6 correspondingly. Mirror filter 10 is located in the IR radiation detector 7 and is capable of compensating external actions to the trajectory of IR radiation passage along the mentioned channel 4. The mirror filter 10 has a reflection spectrum (fig. 6) in the direction to the reference photovoltaic detector 9. By this almost complete application of light from the IR radiation source 6 is achieved.

The best practical option of channel 4 is the one according to which the multiway mirror tray is formed of flat reflecting mirrors and spherical or parabolic reflecting mirrors the number of which exceeds that of reflecting flat mirrors. For example, the tray contains two flat reflecting mirrors 12 (fig. 1, 2), three reflecting spherical or parabolic surfaces 11 and 11' located, for instance, chequerwise thus creating a zig-zag optical path.

Spherical surfaces 11 and 11' serve as a radiation energy concentrator. The IR radiation source 6 is directed to the first reflecting spherical mirror oriented at the corresponding angle to the main optical axis of the tray and is capable of transmitting the radiation energy along the zig-zag trajectory between mirrors thus creating the source image on flat mirrors and on the IR radiation differential detector 7.

For example, two flat reflecting mirrors 12 are located at a certain distance from spherical mirrors 11. For example (on fig. 2 distances L₁ and L₂ are shown schematically), L₁ = 2F₁, where F₁ - focal distance (not shown in the drawing) of spherical mirrors 11. Flat mirrors 12 can be located symmetrically to the optical axis of mirror 11' at angles providing optimum transmission of light to the spherical mirror 11', which can have a different focal distance. Spherical mirror 11' is installed for instance so that to ensure the correlation: L₂ = 2F₂, where F₂ - focal distance (not shown on the drawing) of spherical mirror 11', and L₂ is approximately equal to 10±2 mm. The variant with flat mirrors 12 arranged symmetrically to the optical axis of spherical mirror 11 is preferential.

The proposed gas analyzer and the optical block 1 used therein represent two devices. The first device is an independent measuring device consisting of optical block 1 and control unit 5. The second device is an optical block 1 which is a component part of the first device and can not be used independently without the control unit 5. However, it is the main working unit of the first measuring device and can be used in the other similar measuring devices. Therefore, the operation principle of the gas analyzer and the optical block 1 used therein is described conjointly.

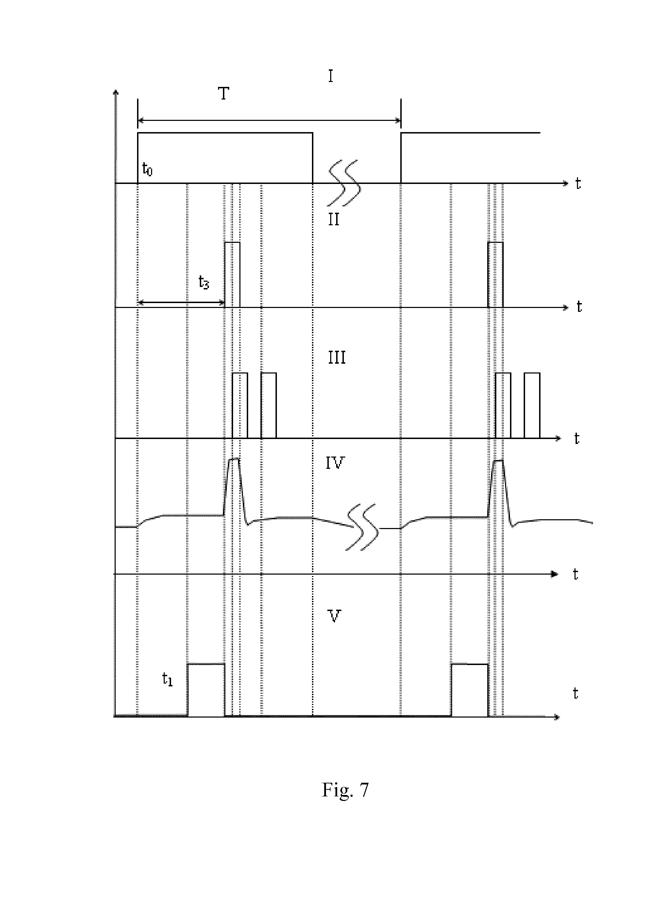

The applicant has developed and tested the experimental sample of the gas analyzer and its optical block being applied for. The operation principle and the obtained results of the invention operation are given below. Time diagram of the gas analyzer operation is given in fig. 7.

Power is supplied to the gas analyzer. Upon completion of initialization of the microcontroller 5.1 at time point to the control unit 5 is switched on and delivers power to the controlled operating amplifiers 17 (diagram I, fig. 7).

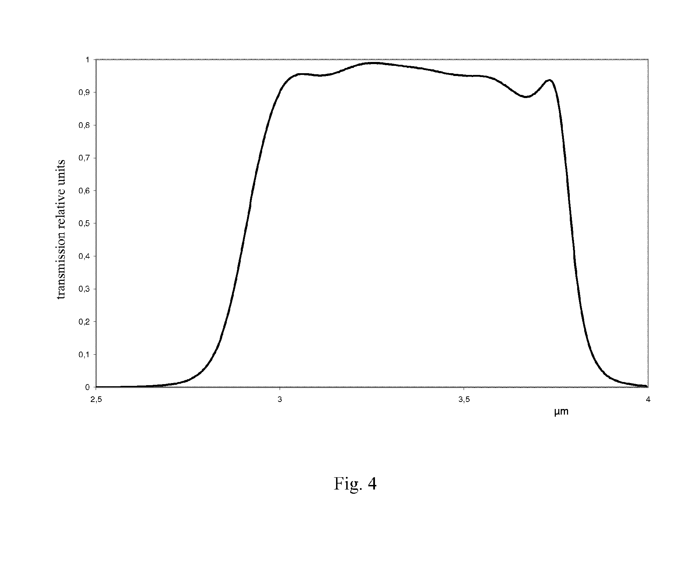

In t₁=75 µs from initial time to a temperature of the optical block shall be measured within 40 µs (diagram V, fig. 7). Upon expiration of delay time t₃ from the time point to the microcontroller 5.1 starts the control scheme 16 of the IR radiation source 6 and shapes a current pulse with duration of 12-15 µs (diagram II, fig. 7). The IR radiation source 6 forms the IR radiation flow the spectral form of which is shown in fig. 3. The IR radiation source 6 installed at the inlet to optical block 1 and connected to control unit 5 directs the flow to the first reflecting spherical mirror 11 located in the channel 4, which is oriented at the corresponding angle to the main optical axis of the tray. The radiation energy (flow) comes from the IR radiation source along the zig-zag trajectory between mirrors 11 and 12 and creates a source image on flat mirrors 11 and on IR radiation detector 7. In such a way the flow is repeatedly reflected from flat mirrors 12 and spherical mirrors 11 located, for instance, chequerwise with creation of a zig-zag optical path. The measured gas, for example methane, comes from ambient medium to channel 4 by means of molecular diffusion through the corresponding apertures and changes the spectral characteristic of the flow according to its absorption spectrum. The flow changed due to gas action comes to outlet of channel 4 where the IR radiation detector 7 is installed. The flow comes to interference mirror filter 10 installed at an angle between the measuring and reference quick-acting photovoltaic detectors 8, 9. The mirror filter 10 has a form of inverse spectra of transmission (fig. 5) and reflection (fig. 6), so a part of flow of the IR radiation source 6 absorbed by the gas being analyzed passes through the filter window 15 of the IR radiation detector 5 with the corresponding form of transmission spectrum (fig. 4), then through the mirror filter 10 it comes to the measuring quick-acting photovoltaic detector 8. A part of IR radiation source spectrum 6 is reflected by the mirror filter 10 to the quick-acting photovoltaic detector 9. At that, the absorption spectra of measuring and reference quick-acting photovoltaic detectors 8, 9 correspond to the spectra directed to them after flow reflection by means of mirror filter 10. In 7.5 µs after initiation of current pulse of the IR radiation source 6 the control unit 5 starts digitization of signals coming from the quick-acting photovoltaic detectors 8 and 9 to inlets of the control unit 5 based on the microprocessor 5.1 from the preamplifiers 17 (diagram III, fig. 7). A signal from each quick-acting photovoltaic detector is digitized by the control unit 5 at the moment of maximum value of a signal and in 10 µs after pulse stop of the IR radiation source 6 (diagram IV, fig. 7). The signal amplitude of the measuring and reference quick-acting photovoltaic detectors 8, 9 is determined as a difference in digitization values. The control unit 5 based on the microcontroller 5.1 calculates the ratio of signal amplitudes of the measuring and reference quick-acting photovoltaic detectors 8, 9, performs digital accumulation in order to increase signal/noise ratio, and makes temperature correction of the calculated and accumulated ratio, and, which is the most important, calculates a concentration of the gas being measured. The control unit 5 regularly transmits the information on the measured gas concentration to the user through digital and/or analog ports 13, 14, for example, to safety system (not shown in the drawing).

The whole period of measurement takes approximately 180 µs. At that, the IR radiation source is in active mode within 12-15 µs. Upon expiration of this time the control unit 5 switches over to "standby" mode in order to decrease energy consumption and terminates the measuring cycle. At the end of the preset time, for example 2000 µs from the beginning of to time, the cycle repeats. Pulse power of the IR radiation source is 300 mW, but due to high pulse ratio the average power of the IR radiation source consumption does not exceed 2.5 mW. Total power consumption of the gas analyzer does not exceed 5 mW. As result minimum energy consumption is achieved by this.

Therefore, the conclusion can be made that the proposed gas analyzer and optical block used within can be used for measurement of concentration of other carbons in the atmosphere (to this end, the corresponding calibration of the gas analyzer control unit is necessary), since:
- it has longer radiation path due to the corresponding structural arrangement of elements inside the tray;
- almost all energy of IRS is used, i.e. energy losses are minimum;
- provision is made for radiation concentration at the detector, which contributes to sensitivity increase;
- necessary adjustment of the control unit operation modes is carried out, which contributes to decrease in energy consumption;
- compensation of external influence is ensured, namely: mechanical stabilization due to design of the differential detector with the built-in mirror filter.

That is why the invention applied for has fast response and high sensitivity with simultaneous minimization of energy consumption and sizes compared to the known IR gas analyzers.

## Claims

1. The gas analyzer contains the optical block, inside which the channel for IR radiation passage from block's inlet to block's outlet is created, the control unit connected with the optical block inlet and outlet, and the IR radiation source located at the optical block inlet, as well as IR radiation detector installed at the inlet to said block; at that, the control unit is capable of changing the IR radiation source operation modes and processing the IR radiation received by the detector with indication of the obtained results; *differing in that* the channel for IR radiation passage in the optical block is capable of concentrating this radiation in the way of its passing through the channel and at the outlet of the channel on the IR radiation detector, for which a quick-acting differential photovoltaic detector with mirror filter which spectral characteristics of transmission and reflection are consistent with the measured gas absorption spectrum and IR source radiation spectrum correspondingly, which is located in the said detector and is capable of compensating the influence of external action to the trajectory of IR radiation passage along the tray on the result of gas concentration measurement is used, and as an IR radiation source is a quick-acting source which pulse ratio of switching on and off is consistent with the pulse ratio of differential photovoltaic detector switching on and off by means of control unit is used.

2. The optical block of the gas analyzer containing the inner channel for infrared radiation passage, the infra-red radiation source located at the channel inlet and the infra-red radiation detector located at the channel outlet, *differing in that* the channel is made in the form of a multiway mirror optical tray capable of concentrating the transmitted infra-red radiation from its inlet, along its path and at its outlet to the detector of this radiation, as an infra-red radiation source, which creates the directional infra-red radiation to the concentrator located in the tray the quick-acting pulse LED is used, and as the infra-red radiation detector a quick-acting differential photovoltaic detector with a mirror filter, the spectral characteristic of transmission and reflection of which are adjusted to the absorption spectrum of the gas being measured and passing through the tray, and to the infra-red source radiation spectrum, and which is capable of compensating the influence of external actions to the trajectory of infra-red radiation passing through the tray on the gas concentration measurement result is used.

3. The optical block of the gas analyzer of claim 2, *differing in that* the multiway mirror tray is formed of flat reflecting mirrors and spherical or parabolic reflecting mirrors a number of which exceeds that of reflecting flat mirrors and which serve as a concentrator of radiation energy; the mirror filter in the differential photoreceiver is installed at an angle of 45° to the photoreceiver normal lines; the infra-red radiation source is directed to the first reflecting spherical mirror oriented at the corresponding angle to the main optical axis of the tray and is capable of radiation energy transmission along the zig-zag trajectory between the mirrors with generation of the source image on flat mirrors and the differential photoreceiver containing the measuring quick-acting photovoltaic detector and reference quick-acting photovoltaic detector, which are located at an angle of 90° to each other.
